# EUROPEAN PATENT APPLICATION

(11) **EP 4 421 958 A1**
(43) Date of publication of application: **28.08.2024**
(21) Application number: 24152660.7
(22) Date of filing: 18.01.2024
(51) Int. Cl.: H01M 50/258, H01M 50/209, H01M 10/04, H01M 50/264, H01M 50/289, H01M 50/291

(54) **BATTERY PACK AND METHOD OF MANUFACTURING SAME**

(30) Priority: 24.02.2023 JP 2023027246
(71) Applicant: Prime Planet Energy & Solutions, Inc., Chuo-ku Tokyo 103-0022 (JP)
(72) Inventor: MORISHITA, Taijyu, Tokyo, 103-0022 (JP)
(74) Representative: Kuhnen & Wacker Patent- und Rechtsanwaltsbüro PartG mbB

(57) **Abstract**

A battery pack (1) includes: a first stack (300A, 400A) and a second stack (300B, 400B); and a case member (500) provided with an inner space that accommodates the first stack (300A, 400A) and the second stack (300B, 400B) and a side wall (510, 520) that defines the inner space, wherein each of the first stack (300A, 400A) and the second stack (300B, 400B) includes a plurality of battery cells (100) arranged side by side in a first direction, an end plate (400A, 400B) located at an end portion of the plurality of battery cells (100), and a restraint member (600) that restrains the plurality of battery cells (100) and the end plate (400A, 400B) along the first direction, the first stack (300A, 400A) and the second stack (300B, 400B) are provided to be arranged side by side in a second direction orthogonal to the first direction, and the end plates (400A, 400B) arranged side by side in the second direction are engaged with each other, and the end plates (400A, 400B) continuously extend across the inner space along the second direction.

## Description

### CROSS REFERENCE TO RELATED APPLICATIONS

This nonprovisional application is based on Japanese Patent Application No. 2023-027246 filed on February 24, 2023 with the Japan Patent Office, the entire contents of which are hereby incorporated by reference.

### BACKGROUND OF THE INVENTION

### Field of the Invention

The present technology relates to a battery pack and a method of manufacturing the battery pack.

### Description of the Background Art

A battery pack has been conventionally known in which a stack including a plurality of battery cells is accommodated in a case.

### SUMMARY OF THE INVENTION

It is required to improve efficiency in mounting the stack accommodated in the case, while securing strength of the case. The conventional battery pack does not necessarily have a sufficient configuration from the above point of view.

It is an object of the present technology to provide: a battery pack in which efficiency in mounting a stack of battery cells is improved; and a method of manufacturing the battery pack.

The present technology provides the following battery pack and method of manufacturing the battery pack.
[1] A battery pack comprising: a first stack and a second stack; and a case member provided with an inner space that accommodates the first stack and the second stack and a side wall that defines the inner space, wherein each of the first stack and the second stack includes a plurality of battery cells arranged side by side in a first direction, an end plate located at an end portion of the plurality of battery cells, and a restraint member that restrains the plurality of battery cells and the end plate along the first direction, the first stack and the second stack are provided to be arranged side by side in a second direction orthogonal to the first direction, and the end plates arranged side by side in the second direction are engaged with each other, and the end plates continuously extend across the inner space along the second direction.
[2] A battery pack comprising: a stack including a plurality of battery cells; and a case member provided with an inner space that accommodates the stack and a side wall that defines the inner space, wherein the stack includes a plurality of battery cells arranged side by side in a first direction, an end plate located at an end portion of the plurality of battery cells, and a restraint member that restrains the plurality of battery cells and the end plate along the first direction, and the end plate and the side wall arranged side by side in a second direction orthogonal to the first direction are engaged with each other, and the end plate continuously extends across the inner space along the second direction.
[3] The battery pack according to [1] or [2], wherein the side wall includes a pair of first side walls facing each other along the first direction and a pair of second side walls facing each other along the second direction, and the end plates or end plate are or is provided at an intermediate position between the pair of first side walls in the first direction so as to extend from one of the pair of second side walls to reach the other of the pair of second side walls.
[4] The battery pack according to [1] or [2], wherein the side wall includes a pair of first side walls facing each other along the first direction and a pair of second side walls facing each other along the second direction, and the end plates or end plate are or is provided at a position adjacent to at least one of the pair of first side walls so as to extend from one of the pair of second side walls to reach the other of the pair of second side walls.
[5] A battery pack comprising: a first stack and a second stack; and a case member provided with an inner space that accommodates the first stack and the second stack and a side wall that defines the inner space, wherein each of the first stack and the second stack includes a plurality of battery cells arranged side by side in a first direction, an intermediate plate located at an intermediate portion between the plurality of battery cells, and a restraint member that restrains the plurality of battery cells and the intermediate plate along the first direction, the first stack and the second stack are provided to be arranged side by side in a second direction orthogonal to the first direction, and the intermediate plates arranged side by side in the second direction are engaged with each other, and the intermediate plates continuously extend across the inner space along the second direction.
[6] A battery pack comprising: a stack including a plurality of battery cells; and a case member provided with an inner space that accommodates the stack and a side wall that defines the inner space, wherein the stack includes a plurality of battery cells arranged side by side in a first direction, an intermediate plate located at an intermediate portion between the plurality of battery cells, and a restraint member that restrains the plurality of battery cells and the intermediate plate along the first direction, and the intermediate plate and the side wall arranged side by side in a second direction orthogonal to the first direction are engaged with each other, and the intermediate plate continuously extends across the inner space along the second direction.
[7] The battery pack according to [1] or [3] to [5], wherein each of the first stack and the second stack is formed to be elastically deformable along the first direction.
[8] The battery pack according to [2] to [4] or [6], wherein the stack is formed to be elastically deformable along the first direction.
[9] A method of manufacturing the battery pack according to [1] or [3] to [5], the method comprising: preparing a plate member having a heat radiation property; preparing each of the first stack and the second stack; providing the first stack and the second stack on the plate member so as to arrange the first stack and the second stack side by side in the second direction; mounting the side wall on the plate member so as to sandwich the first stack and the second stack along each of the first direction and the second direction; and closing the inner space by providing a cover member.
[10] A method of manufacturing the battery pack according to [2] to [4] or [6], the method comprising: preparing a plate member having a heat radiation property; preparing the stack; providing the stack on the plate member; mounting the side wall on the plate member so as to sandwich the stack along each of the first direction and the second direction; and closing the inner space by providing a cover member.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view of a battery assembly.
Fig. 2 is a perspective view of a battery cell.
Fig. 3 is a top view showing a state in which a plurality of battery assemblies are accommodated in a case member.
Fig. 4 is a top view showing the plurality of battery assemblies shown in Fig. 3.
Fig. 5 is a diagram showing a state in which the case member shown in Fig. 3 is disassembled into a bottom surface and side walls.
Fig. 6 is an exploded perspective view of a battery pack.
Each of Figs. 7 to 12 is a diagram showing one step of a method of manufacturing the battery pack.
Fig. 13 is a perspective view showing an engagement portion between end plates.
Fig. 14 is a schematic view showing a structure of the engagement portion between the end plates.
Fig. 15 is a perspective view showing an engagement portion between the end plate and the side wall of the case member.
Fig. 16 is a schematic view showing a structure of the engagement portion between the end plate and the side wall of the case member.
Fig. 17 is a diagram showing a structure that restrains the battery assembly.
Fig. 18 is an enlarged view showing surroundings around the engagement portion between the end plate and the restraint member in Fig. 17.
Fig. 19 is a perspective view of a battery module according to a modification.
Fig. 20 is a cross sectional view along XX-XX in Fig. 19.
Each of Figs. 21 and 22 is a graph showing a physical property of a cooling material.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery.

In the present specification, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

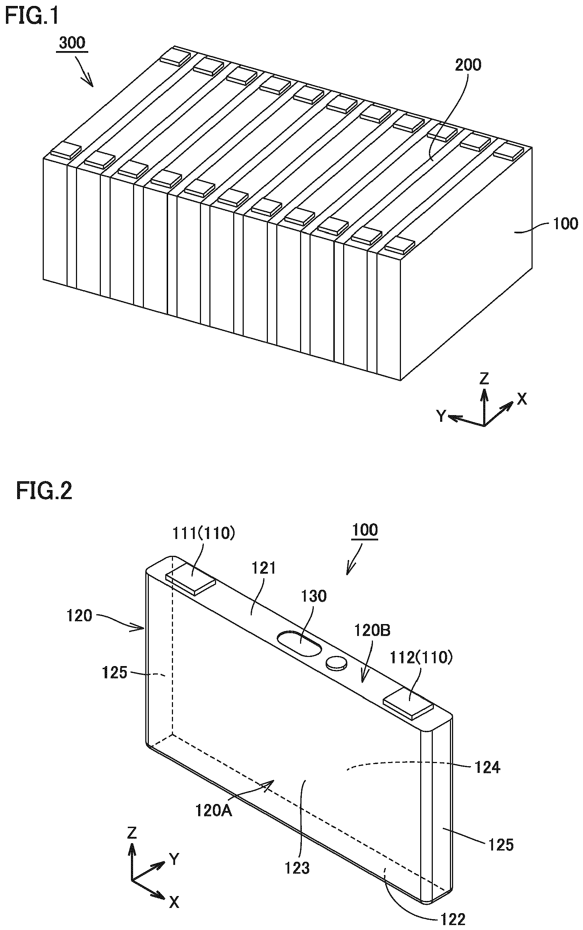

Fig. 1 is a perspective view of a battery assembly 300. Battery assembly 300 shown in Fig. 1 includes battery cells 100 and separators 200 (inter-cell separators). Battery cells 100 and separators 200 are arranged alternately along a Y axis direction (first direction).

The plurality of battery cells 100 are battery cells each having a prismatic shape, and are provided along the Y axis direction. The plurality of battery cells 100 are electrically connected together by a bus bar (not shown).

Separators 200 are provided between the plurality of battery cells 100. Each of separators 200 prevents unintended electrical conduction between adjacent battery cells 100. Separator 200 secures an electrical insulation property between adjacent battery cells 100.

Fig. 2 is a perspective view of each battery cell 100. As shown in Fig. 2, battery cell 100 has a prismatic shape. Battery cell 100 has electrode terminals 110, a battery case 120, and a gas-discharge valve 130.

Electrode terminals 110 are formed on battery case 120. Electrode terminals 110 have a positive electrode terminal 111 and a negative electrode terminal 112 arranged side by side along an X axis direction (second direction) orthogonal to the Y axis direction (first direction). Positive electrode terminal 111 and negative electrode terminal 112 are provided to be separated from each other in the X axis direction.

Battery case 120 has a rectangular parallelepiped shape and forms an external appearance of battery cell 100. Battery case 120 includes: a case main body 120A that accommodates an electrode assembly (not shown) and an electrolyte solution (not shown); and a sealing plate 120B that seals an opening of case main body 120A. Sealing plate 120B is joined to case main body 120A by welding.

Battery case 120 has an upper surface 121, a lower surface 122, a first side surface 123, a second side surface 124, and two third side surfaces 125.

Upper surface 121 is a flat surface orthogonal to a Z axis direction (third direction) orthogonal to the Y axis direction and the X axis direction. Electrode terminals 110 are disposed on upper surface 121. Lower surface 122 faces upper surface 121 along the Z axis direction.

Each of first side surface 123 and second side surface 124 is constituted of a flat surface orthogonal to the Y axis direction. Each of first side surface 123 and second side surface 124 has the largest area among the areas of the plurality of side surfaces of battery case 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When the temperature of battery cell 100 is increased (thermal runaway) and internal pressure of battery case 120 becomes more than or equal to a predetermined value due to gas generated inside battery case 120, gas-discharge valve 130 discharges the gas to outside of battery case 120.

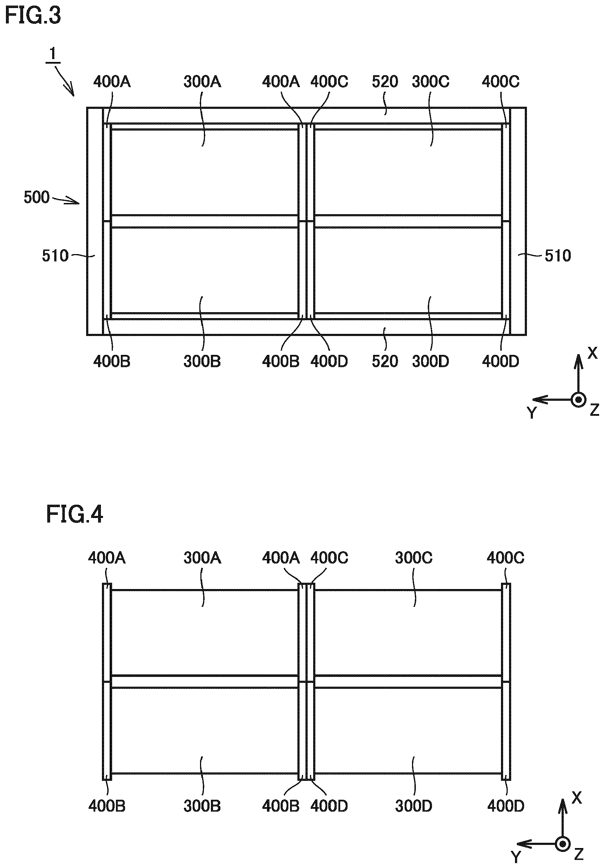

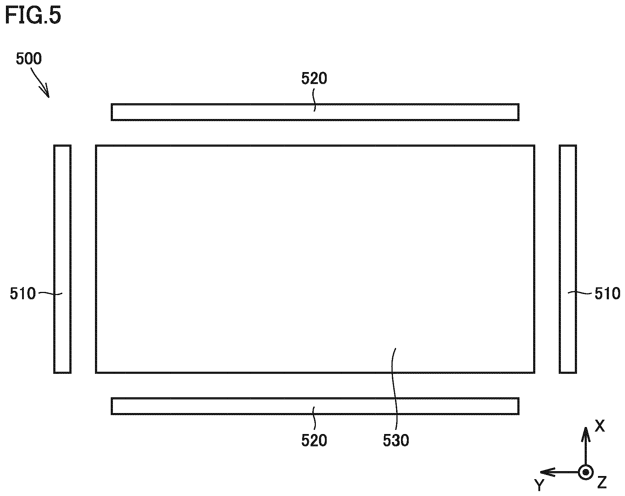

Fig. 3 is a top view showing a state in which battery assemblies 300A, 300B, 300C, 300D are accommodated in a case member 500 of a battery pack 1. Fig. 4 is a top view showing the plurality of battery assemblies 300A, 300B, 300C, 300D shown in Fig. 3. Fig. 5 is a diagram showing a state in which case member 500 is disassembled into a bottom surface and side walls.

As shown in Figs. 3 and 4, battery pack 1 includes: battery assembly 300A and end plates 400A (first stack) provided at both ends thereof; battery assembly 300B and end plates 400B (second stack) provided at both ends thereof; battery assembly 300C and end plates 400C (third stack) provided at both ends thereof; and battery assembly 300D and end plates 400D (fourth stack) provided at both ends thereof.

Battery assembly 300A and end plates 400A are provided to be arranged side by side with battery assembly 300B and end plates 400B in the X axis direction (second direction). Similarly, battery assembly 300C and end plates 400C are provided to be arranged side by side with battery assembly 300D and end plates 400D in the X axis direction.

Battery assembly 300A and end plates 400A are provided to be arranged side by side with battery assembly 300C and end plates 400C in the Y axis direction (first direction). Similarly, battery assembly 300B and end plates 400B are provided to be arranged side by side with battery assembly 300D and end plates 400D in the Y axis direction.

Case member 500 includes: a pair of first side walls 510 facing each other along the Y axis direction; and a pair of second side walls 520 facing each other along the X axis direction. First side walls 510 and second side walls 520 define an inner space of case member 500.

One (left side in the figure) of end plates 400A provided at the both end portions of battery assembly 300A is provided to be continuous to end plate 400B at a position adjacent to first side wall 510. As a result, at the position adjacent to first side wall 510, end plates 400A, 400B continuously extend across the inner space of case member 500 along the X axis direction so as to extend from one second side wall 520 to reach the other second side wall 520.

The other (right side in the figure) of end plates 400A is provided to be continuous to end plate 400B at an intermediate position between the pair of first side walls 510. As a result, at the intermediate position between the pair of first side walls 510, end plates 400A, 400B continuously extend across the inner space of case member 500 along the X axis direction so as to extend from one second side wall 520 to reach the other second side wall 520.

Similarly, one (right side in the figure) of end plates 400C provided at both end portions of battery assembly 300C is provided to be continuous to end plate 400D at the position adjacent to first side wall 510. As a result, at the position adjacent to first side wall 510, end plates 400C, 400D continuously extend across the inner space of case member 500 along the X axis direction so as to extend from one second side wall 520 to reach the other second side wall 520.

Further, the other (left side in the figure) of end plates 400C is provided to be continuous to end plate 400D at the intermediate position between the pair of first side walls 510. As a result, at the intermediate position between the pair of first side walls 510, end plates 400C, 400D continuously extend across the inner space of case member 500 along the X axis direction so as to extend from one second side wall 520 to reach the other second side wall 520.

As shown in Fig. 5, the pair of first side walls 510 and the pair of second side walls 520 are prepared as separate members and are each joined to bottom surface 530. The pair of first side walls 510 are provided to face each other in the Y axis direction, and the other second side walls 520 are provided to face each other in the X axis direction.

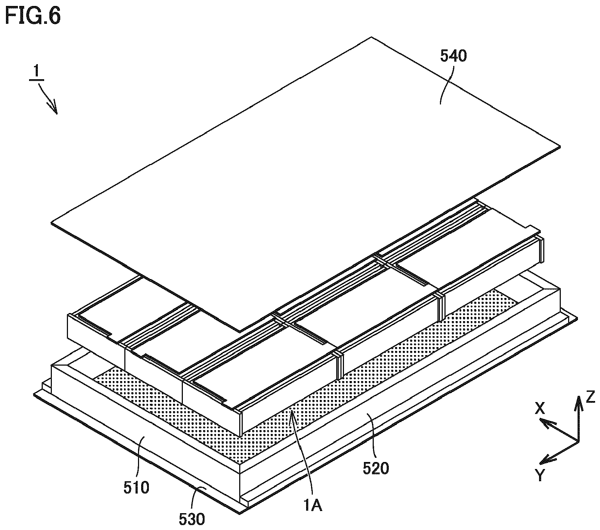

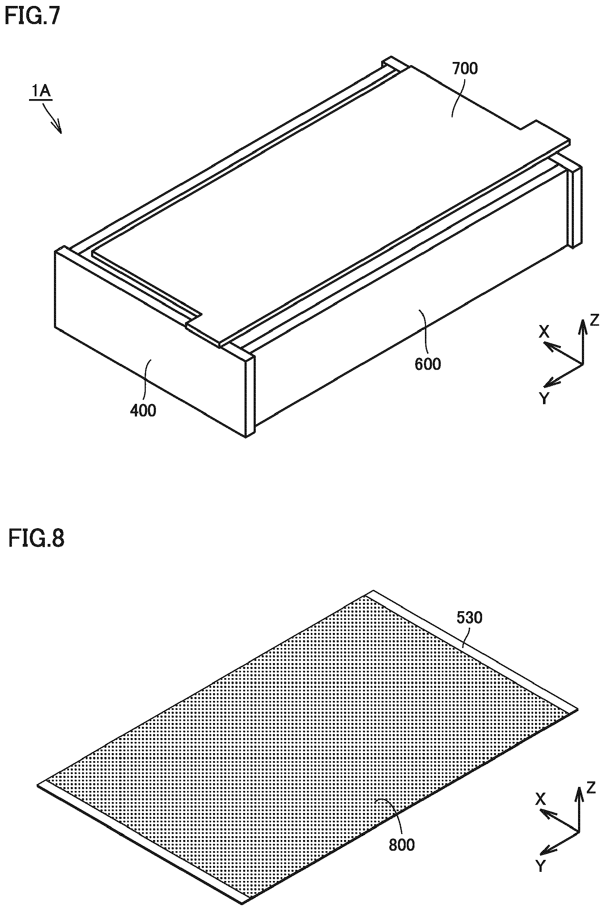

Fig. 6 is an exploded perspective view of battery pack 1. Figs. 7 to 12 are diagrams showing respective steps of a method of manufacturing battery pack 1. A manufacturing process for battery pack 1 will be described with reference to Figs. 6 to 12.

As shown in Fig. 6, case member 500 that accommodates a plurality of battery modules 1A includes first side walls 510, second side walls 520, bottom surface 530, and a cover member 540.

As shown in Fig. 7, each of battery modules 1A accommodated in case member 500 includes: restraint members 600 that restrain, in the Y axis direction, end plates 400 provided at both ends of battery assembly 300; and a control substrate 700 provided on battery assembly 300. Each of end plates 400 is formed to protrude with respect to restraint member 600 in the X axis direction.

As shown in Fig. 8, bottom surface 530 (plate member) having a heat radiation property is prepared. Bottom surface 530 may be composed of a metal such as aluminum, for example. As in the example of Fig. 8, a cooling material 800 may be applied on bottom surface 530. Cooling material 800 can also function as an adhesive agent for temporarily attaching battery module 1A, first side walls 510 and second side walls 520, which are to be fixed to bottom surface 530. A coolant path (not shown) may be formed in bottom surface 530.

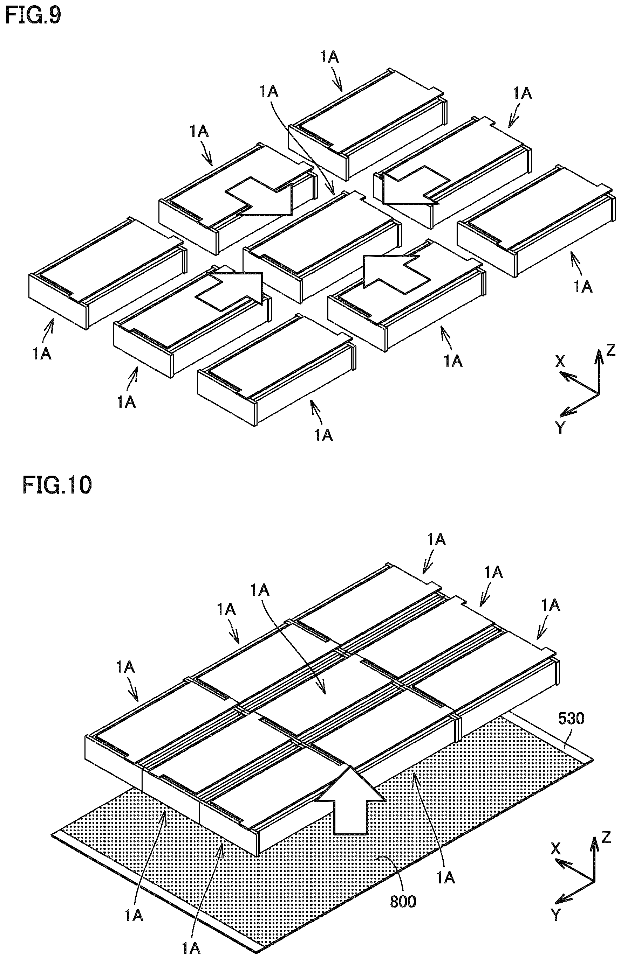

As shown in Fig. 9, the plurality of battery modules 1A are arranged along the X axis direction and the Y axis direction and are combined together. From this state, bottom surface 530 is attached from the bottom surface side (side opposite to control substrate 700) of battery module 1A as shown in Fig. 10.

It should be noted that the number of battery modules 1A to be combined may be appropriately changed. In the example of Figs. 9 and 10, three battery modules 1A are arranged in each of the X axis direction and the Y axis direction; however, a plurality of battery modules 1A may be arranged only in the Y axis direction or a plurality of battery modules 1A may be arranged only in the X axis direction, for example.

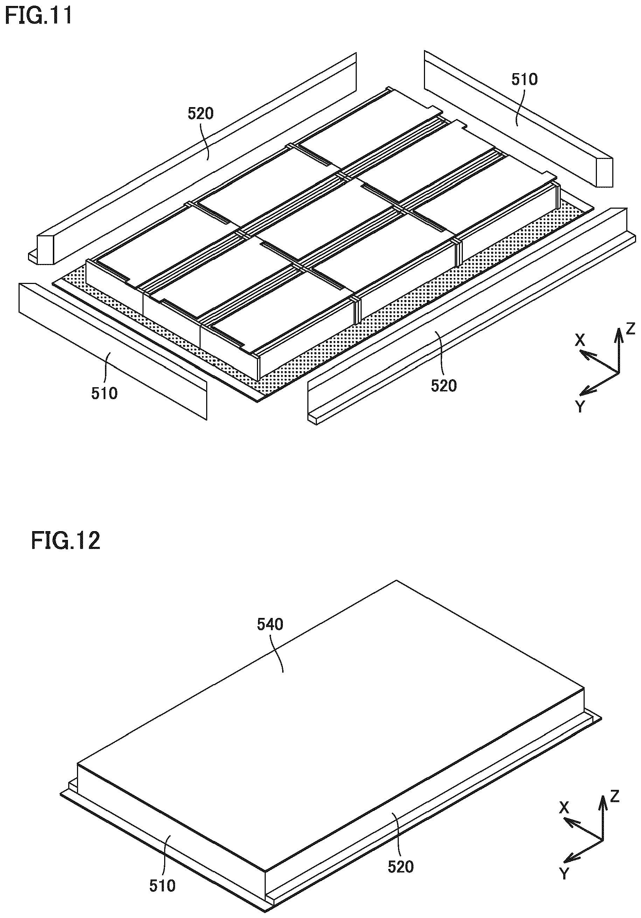

From the state shown in Fig. 10, the pair of first side walls 510 are provided to sandwich the plurality of combined battery modules 1A in the Y axis direction, and the pair of second side walls 520 are provided to sandwich the plurality of combined battery modules 1A in the X axis direction as shown in Fig. 11. Each of first side walls 510 and second side walls 520 is mounted on bottom surface 530. First side walls 510, second side walls 520, and bottom surface 530 are temporarily attached to bottom surface 530 and are then joined together by welding, for example.

After first side walls 510 and second side walls 520 are mounted on bottom surface 530, cover member 540 is attached onto first side walls 510 and second side walls 520 as shown in Fig. 12. Thus, the inner space of case member 500 is closed.

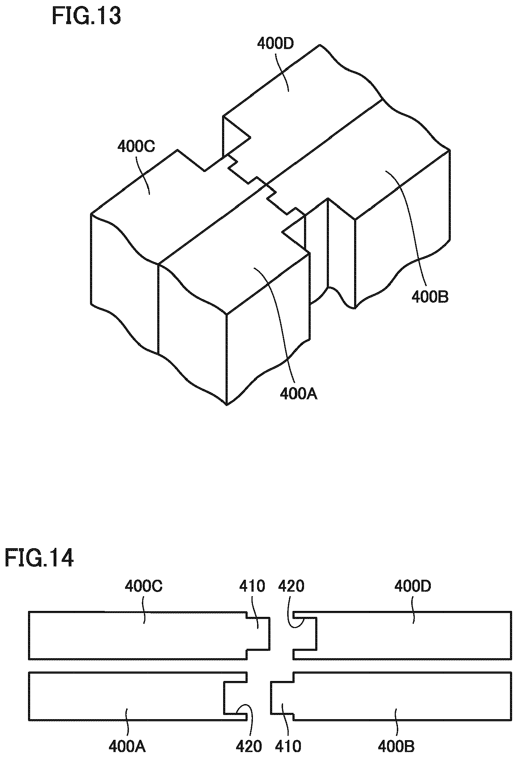

As shown in Fig. 13, end plates 400A, 400B provided to be continuous in the X axis direction are engaged with each other. Similarly, end plates 400C, 400D provided to be continuous in the X axis direction are engaged with each other.

As schematically shown in Fig. 14, since a protrusion 410 provided at the tip of end plate 400B is fitted into a recess 420 provided at the tip of end plate 400A, end plates 400A, 400B are engaged with each other, thereby restraining movement in two directions (X axis direction and Y axis direction). Similarly, since a protrusion 410 provided at the tip of end plate 400C is fitted into a recess 420 provided at the tip of end plate 400D, end plates 400C, 400D are engaged with each other, thereby restricting movement in two directions (X axis direction and Y axis direction).

It should be noted that the scope of the present technology is not limited to the examples shown in Figs. 13 and 14, and the shapes, numbers, arrangements, and the like of protrusions 410 and recesses 420 can be changed as appropriate.

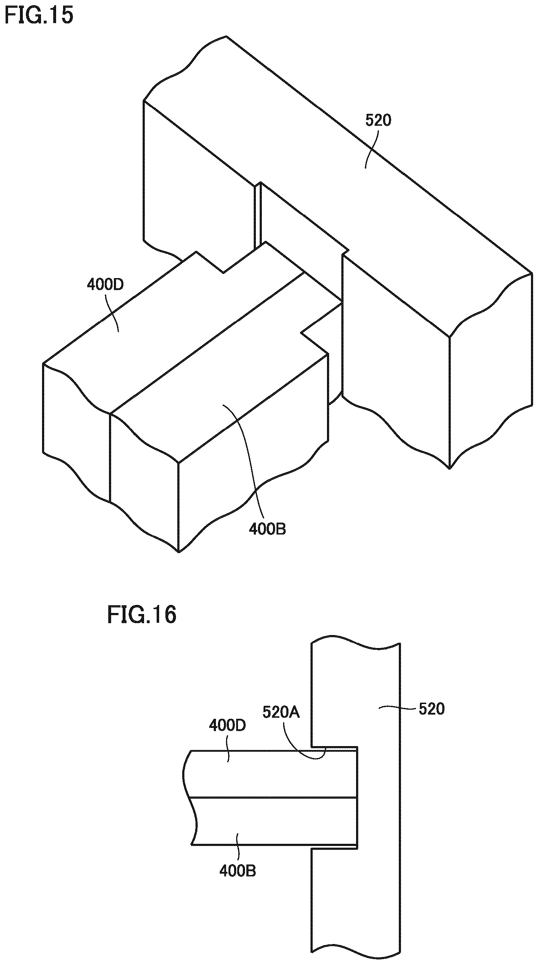

As shown in Fig. 15, end plates 400B, 400D reaching second side wall 520 of case member 500 are engaged with second side wall 520.

As schematically shown in Fig. 16, since each of the tips of end plates 400B, 400D is fit into a recess 520A provided at second side wall 520, end plates 400B, 400D are engaged with second side wall 520, thereby restraining movement in two directions (X axis direction and Y axis direction).

It should be noted that the scope of the present technology is not limited to the example shown in Figs. 15 and 16, and a structure may be employed in which a protrusion is provided on the second side wall 520 side and a recess is provided on the end plate 400 side, for example. Further, the shapes, numbers, arrangements, and the like of the protrusions and the recesses can be changed as appropriate.

In battery pack 1 according to the present embodiment, end plates 400 are engaged with each other and end plates 400 and second side walls 520 are engaged with each other, with the result that end plates 400 continuously extend across the inner space of case member 500 along the X axis direction. Hence, each of end plates 400 can function as part of a structural material for reinforcing case member 500.

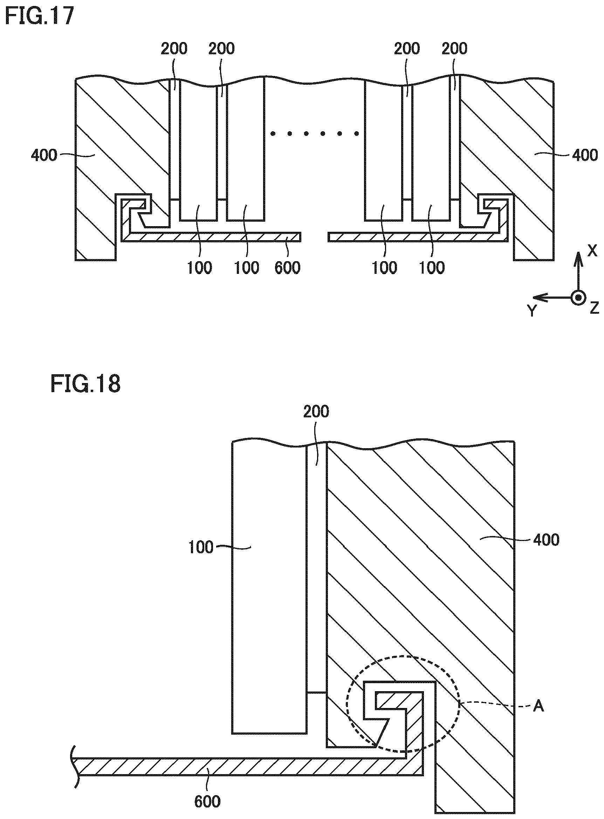

Fig. 17 is a diagram showing a structure for restraining battery assembly 300. Fig. 18 is an enlarged view showing surroundings around an engagement portion between end plate 400 and restraint member 600 in Fig. 17.

As shown in Figs. 17 and 18, the stack of battery cells 100 and separators 200 stacked in the Y axis direction is sandwiched between two end plates 400. Battery cells 100 and separators 200 are pressed by end plates 400 and are restrained between two end plates 400.

End plates 400 are disposed at both ends of the stack of battery cells 100 and separators 200 in the Y axis direction. Restraint member 600 connects the two end plates 400 to each other.

Each of separators 200 can be composed of, for example, a rubber-like material that is elastically deformable. Thus, the stack of battery cells 100 and end plates 400 is formed to be elastically deformable along the Y axis direction. This elastic deformation may occur on the order of about several mm in the whole of the stack of battery cells 100 and end plates 400, for example.

Restraint member 600 is fixed to each end plate 400 in a state in which a compression force in the Y axis direction is applied to the stack of battery cells 100 and end plates 400. On this occasion, as shown in a portion A of Fig. 18, a slight amount of clearance exists in the engagement portion between end plate 400 and restraint member 600. By releasing the compressive force thereafter, a tensile force is exerted on restraint member 600 connecting two end plates 400. As a reaction thereto, restraint member 600 presses two end plates 400 in a direction of bringing them closer to each other.

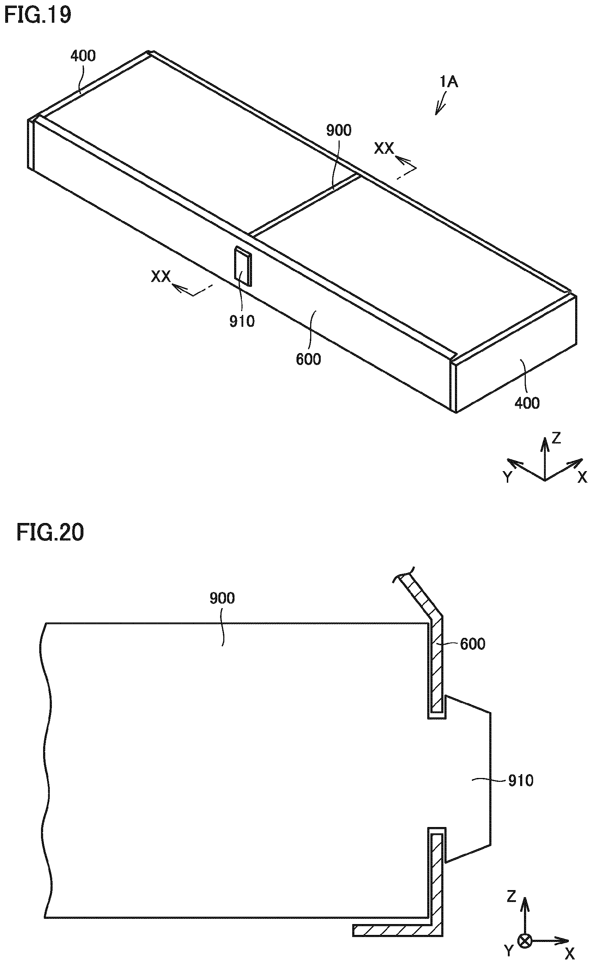

Fig. 19 is a perspective view of a modification of battery module 1A. Fig. 20 is a cross sectional view along XX-XX in Fig. 19.

In the modification shown in Figs. 19 and 20, an intermediate plate 900 is provided at an intermediate portion of battery module 1A in the Y axis direction, and intermediate plate 900 is provided with a protrusion 910 that can be engaged with another battery module 1A or second side wall 520 of case member 500.

As shown in Fig. 20, protrusion 910 is provided to protrude outward with respect to restraint member 600 in the X axis direction. Restraint member 600 and the intermediate plate are engaged with each other at a root portion of protrusion 910.

Also in the present modification, end plate 400 protrudes outward with respect to restraint member 600 in the X axis direction. However, protrusion 910 of intermediate plate 900 protrudes outward more greatly than end plate 400.

According to battery module 1A according to the modification shown in Figs. 19 and 20, intermediate plate 900 can function as part of a structural material for reinforcing case member 500. Further, irregularities may be provided at the tips of intermediate plates 900 (as with end plates 400A, 400B, 400C, 400D shown in Figs. 13 to 16) to engage intermediate plates 900 or engage intermediate plate 900 and case member 500, thereby restraining relative movement in two directions (X axis direction and Y axis direction).

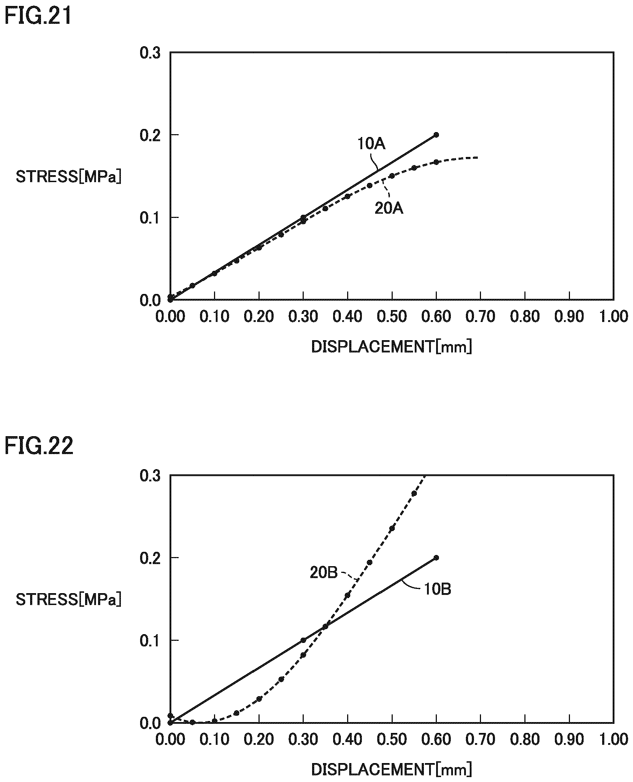

Figs. 21 and 22 are graphs showing a stress-displacement relation of cooling material 800 in a shear direction and a tensile direction. As cooling material 800, for example, a silicone gap filler having a thermal conductivity of about 2.0 W/m·K and compressible after curing can be used. When a straight line 10A shown in Fig. 21 represents a design target value of the stress-displacement relation in the shear direction, a material exhibiting a property represented by a curve 20A can be used. When a straight line 10B in Fig. 22 represents a design target value of the stress-displacement relation in the tensile direction, a material exhibiting a property represented by a curve 20B can be used. As each of the materials having the properties represented by curves 20A, 20B, for example, TC-5515 provided by Dow Toray can be used.

In battery pack 1 according to the present embodiment, since (one or both of) end plate 400 and intermediate plate 900 functions as part of a structural material for case member 500 as described above, rigidity of case member 500 can be improved without adding other member(s). As a result, the inner space of case member 500 is increased, thus resulting in improved efficiency in mounting the stack including the plurality of battery cells 100.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery pack comprising:
a stack (300, 400) including a plurality of battery cells (100), and
a case member (500) provided with an inner space that accommodates the stack (300, 400) and a side wall (510, 520) that defines the inner space, wherein
I)
the stack (300, 400) includes a first stack (300A, 400A) and a second stack (300B, 400B),
each of the first stack (300A, 400A) and the second stack (300B, 400B) includes
a plurality of battery cells (100) arranged side by side in a first direction,
an end plate (400A, 400B) located at an end portion of the plurality of battery cells (100), and
a restraint member (600) that restrains the plurality of battery cells (100) and the end plate (400A, 400B) along the first direction,
the first stack (300A, 400A) and the second stack (300B, 400B) are provided to be arranged side by side in a second direction orthogonal to the first direction, and
the end plates (400A, 400B) arranged side by side in the second direction are engaged with each other, and the end plates (400A, 400B) continuously extend across the inner space along the second direction, or
II)
the stack (300, 400) includes
a plurality of battery cells (100) arranged side by side in a first direction,
an end plate (400) located at an end portion of the plurality of battery cells (100), and
a restraint member (600) that restrains the plurality of battery cells (100) and the end plate (400) along the first direction,
the end plate (400) and the side wall (520) arranged side by side in a second direction orthogonal to the first direction are engaged with each other, and the end plate (400) continuously extends across the inner space along the second direction, or
III)
the stack (300, 400) includes a first stack (300A, 400A) and a second stack (300B, 400B),
each of the first stack (300A, 400A) and the second stack (300B, 400B) includes
a plurality of battery cells (100) arranged side by side in a first direction,
an intermediate plate (900) located at an intermediate portion between the plurality of battery cells (100), and
a restraint member (600) that restrains the plurality of battery cells (100) and the intermediate plate (900) along the first direction,
the first stack (300A, 400A) and the second stack (300B, 400B) are provided to be arranged side by side in a second direction orthogonal to the first direction, and
the intermediate plates (900) arranged side by side in the second direction are engaged with each other, and the intermediate plates (900) continuously extend across the inner space along the second direction, or
IV)
the stack (300, 400) includes
a plurality of battery cells (100) arranged side by side in a first direction,
an intermediate plate (900) located at an intermediate portion between the plurality of battery cells (100), and
a restraint member (600) that restrains the plurality of battery cells (100) and the intermediate plate (900) along the first direction,
the intermediate plate (900) and the side wall (520) arranged side by side in a second direction orthogonal to the first direction are engaged with each other, and the intermediate plate (900) continuously extends across the inner space along the second direction.

2. The battery pack according to claim 1, wherein
the side wall (510, 520) includes a pair of first side walls (510) facing each other along the first direction and a pair of second side walls (520) facing each other along the second direction, and
the end plates or end plate (400) are or is provided at an intermediate position between the pair of first side walls (510) in the first direction so as to extend from one of the pair of second side walls (520) to reach the other of the pair of second side walls (520).

3. The battery pack according to claim 1, wherein
the side wall (510, 520) includes a pair of first side walls (510) facing each other along the first direction and a pair of second side walls (520) facing each other along the second direction, and
the end plates or end plate (400) are or is provided at a position adjacent to at least one of the pair of first side walls (510) so as to extend from one of the pair of second side walls (520) to reach the other of the pair of second side walls (520).

4. The battery pack according to claim 1, wherein the stack (300, 400) is formed to be elastically deformable along the first direction.

5. A method of manufacturing the battery pack (1) according to claim 1, the method comprising:
preparing a plate member (530) having a heat radiation property;
preparing the stack (300, 400);
providing the stack (300, 400) on the plate member (530);
mounting the side wall (510, 520) on the plate member (530) so as to sandwich the stack (300, 400) along each of the first direction and the second direction; and
closing the inner space by providing a cover member (540).
